# EUROPEAN PATENT APPLICATION

(11) **EP 1 648 161 A2**
(43) Date of publication of application: **19.04.2006**
(21) Application number: 05256329.3
(22) Date of filing: 12.10.2005
(51) Int. Cl.: H04N 5/14

(54) **Frequency content motion detection**

(30) Priority: 13.10.2004 US 618867 P; 27.09.2005 US 237606
(71) Applicant: Genesis Microchip, Inc., Alviso, CA 95002 (US); Suyambukesan, Jayakanth, Arlington, TX 76010 (US); Schwartz, Peter, San Jose, CA 95120 (US); Dong, Xu, San Jose, CA 95135 (US)
(72) Inventor: Suyambukesan, Jayakanth, Arlington, TX 76010 (US); Swartz, Peter, San Jose, CA 95120 (US); Dong, Xu, San Jose, CA 95135 (US)
(74) Representative: Alton, Andrew

(57) **Abstract**

Frequency content motion detection is performed by decomposing a raw field luminance data in to a number of frequency content sub-bands, detecting motion using the raw field luminance data in parallel with the decomposing, generating a motion correction value by multiplying absolute values of the sub-bands by weighting factors, and applying the motion correction value to detected motion.

## Description

The invention relates to display devices. More specifically, the invention describes a method and apparatus for enhancing the appearance of motion.

Motion estimation primarily involves frame motion detection. However, in regions of high frequency content, particularly high frequency vertical and high frequency both along vertical and horizontal results in aliasing of the spatial content. Motion detection from the aliased data results in false motion detection adversely affecting the quality of the output progressive video.

One approach to addressing this problem relies upon frame based motion detection where the motion data is used to de-interlace the interlaced video. Frame based motion detection primarily involves detecting motion values by evaluating the absolute difference of adjacent same parity fields (i.e, odd and odd or even and even). Based upon the magnitude of the absolute difference, the fields are merged in case of low motion values or spatially interpolated for the output progressive video.

However, high frequency spatial transitions can greatly reduce motion detection performance by "tricking" conventional motion detectors into ascribing true motion to the energy associated with the spatial transition resulting in reduced quality of the resultant de-interlaced output video.

Therefore, what is required is an adaptive method and apparatus for adaptively modifying motion detection in the presence of high frequency spatial transitions.

In one embodiment, a method of frequency content motion detection is performed by decomposing a raw field luminance data in to a number of frequency content sub-bands, detecting motion using the raw field luminance data in parallel with the decomposing, generating a motion correction value by multiplying absolute values of the sub-bands by weighting factors, and applying the motion correction value to detected motion.

In another embodiment, an apparatus for frequency content motion detection, includes a sub-band processor for decomposing a raw field luminance data in to a number of frequency content sub-bands, a motion detector for detecting motion using the raw field luminance data in parallel with the decomposing, a motion correction value generator for generating a motion correction value by multiplying absolute values of the sub-bands by weighting factors, and an operator for applying the motion correction value to detected motion.

In yet another embodiment, computer program product for frequency content motion detection includes computer code for decomposing a raw field luminance data in to a number of frequency content sub-bands, computer code for detecting motion using the raw field luminance data in parallel with the decomposing, computer code for generating a motion correction value by multiplying absolute values of the sub-bands by weighting factors, computer code for applying the motion correction value to detected motion, and computer readable medium for storing the computer code.

Other aspects and advantages of the invention will become apparent from the following detailed description taken in conjunction with the accompanying drawings which illustrate, by way of example, the principles of the invention. Embodiments of the invention will now be described by way of example with reference to the accompanying drawings, in which:
FIG. 1 shows an exemplary high frequency spatial transition in the region of a vertical feature edge and a horizontal feature edge.
FIG. 2 shows a schematic block diagram of a motion detection system having a motion detection block and a frequency content motion correction value generator in accordance with an embodiment of the invention.
FIG. 3 shows a flowchart detailing a process in accordance with an embodiment of the invention.
Fig. 4 shows in more detail a particular implementation of the sub-band generation operation described above in reference to the sub-band processor unit.

Reference will now be made in detail to a particular embodiment of the invention an example of which is illustrated in the accompanying drawings. While the invention will be described in conjunction with the particular embodiment, it will be understood that it is not intended to limit the invention to the described embodiment. To the contrary, it is intended to cover alternatives, modifications, and equivalents as may be included within the scope of the invention as defined by the appended claims.

In the described embodiment, a input raw field luminance datastream is decomposed in to a number of frequency content sub-bands concurrently with detecting motion using the input raw field luminance data. A motion correction value is subsequently generated by multiplying absolute values of the sub-bands by pre-determined weighting factors. The motion correction value is then applied to the detected motion. In this way, motion detection performance is improved which subsequently improves the quality of the resultant de-interlaced (progressive) output video.

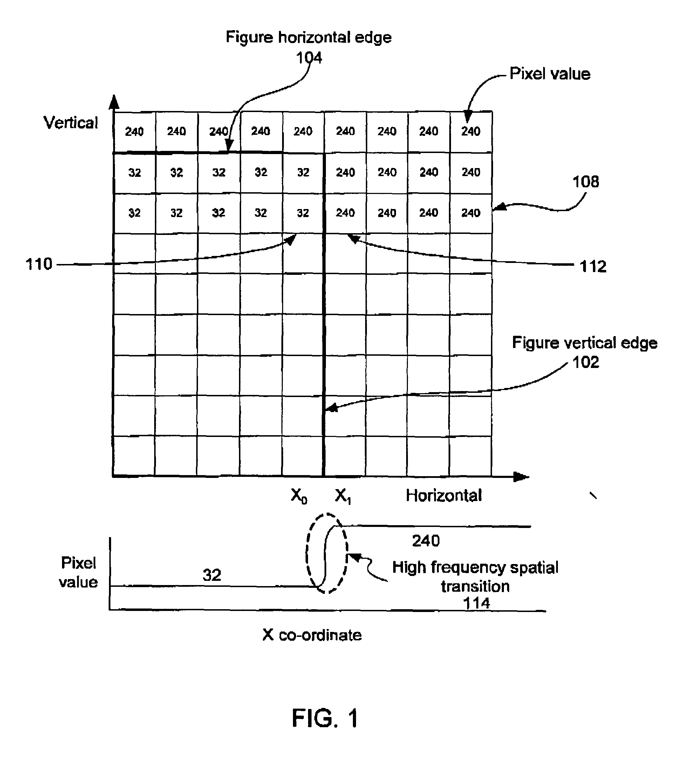

FIG. 1 shows an exemplary high frequency spatial transition 100 in the region of a vertical feature edge 102 and a horizontal feature edge 104. A high frequency spatial transition can occur whenever there is an abrupt change in pixel values as, for example, as represented by the horizontal line 108 that includes the vertical feature edge 102. In this example, at the feature edge 102, a pixel 110 located at an X co-ordinate x₀ has a pixel value of 32 whereas an immediately adjacent pixel 112 located at an x co-ordinate X₁ has a pixel value of 240 resulting in the pixel value transition 114 having a fast rise time t₀. In this case, the energy represented by the pixel value transition 114 may be sufficient to mimic frame to frame motion and induce errors in frame based motion detection schemes. By identifying and adaptively compensating for these high frequency spatial transitions, the invention improves motion detection and the resulting output video.

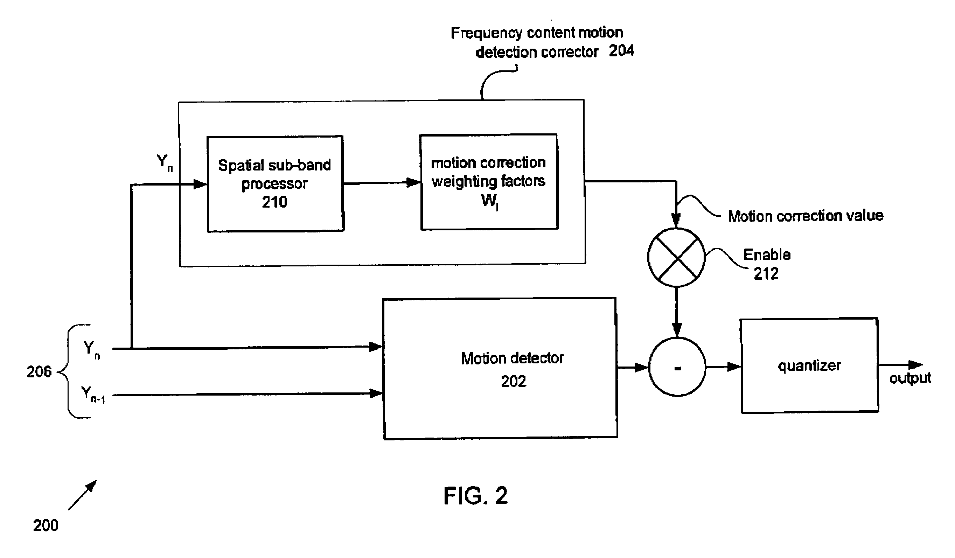

FIG. 2 shows a schematic block diagram of a motion detection system 200 having a motion detection block 202 and a frequency content motion correction value generator 204 in accordance with an embodiment of the invention. As shown, an input raw luminance data stream 206 (Yₙ for a frame n and Yₙ₋₁ a frame n-1) is received at the system 200. In the described embodiment, the raw luminance data Yₙ for the frame n and the raw luminance data Yₙ₋₁ for the frame n-1 are both passed to the motion detection block 202 in parallel whereas only the raw luminance data Yₙ is passed to the frequency content motion correction value generator 204. In the described embodiment, the frequency content motion correction value generator 204 is arranged to provide a motion value correction factor MCF to the output of the motion detection block 202 in parallel with the operation of the motion detection block 202 by the operation of a spatial sub-band processor 210 that decomposes the raw luminance data Yₙ into a number of frequency sub-bands. In the embodiment shown, the processor 210 includes a number of low and high pass filters consistent with the number of sub-bands.

Accordingly, in one arrangement, the raw luminance data Yₙ is processed by the processor 210 into four frequency sub-bands: vertical low horizontal high (V_{L}V_{H}), vertical low horizontal high (V_{L}H_{L}), vertical high horizontal high (V_{H}HH), and vertical high horizontal low (V_{H}H_{L}). Once the sub-band processor 210 generates the appropriate sub-band values, the absolute value of the sub-band values are multiplied by empirically determined weighting factors Wᵢ to derive the motion correction value MCV. This motion correction value is later subtracted from the absolute difference value from field motion detection in order to correct the detected motion.

In one case, the weighting factors Wᵢ are such that the vertical-high (V_{H}) and horizontal-low (H_{L}) sub-band weight is approximately one-third of the sum of weights Σ Wᵢ and the weight for vertical low horizontal low L_{L} sub-band is zero, while the weights for vertical high horizontal high H_{H} and vertical-low and horizontal-high L_{H} sub-band is about one-sixth of the sum of weights Σ Wᵢ. Accordingly, the motion correction value MCV estimated using the sub-band analysis of the spatial content helps in reducing the pseudo or false high motion values usually exhibited by regions in video streams having high H_{L} and H_{H} sub-band energies.

In addition, an enabling block 212 uses thresholds (both minimum and maximum) to enable or disable motion correction based upon the minimum and maximum thresholds. For example, if any of the sub-band energies are beyond the threshold range then motion-correction is disabled. This threshold based motion correction is necessary to overcome special instances in which the sub-band energies are abnormally high while the motion values detected by frame motion as described earlier are nonetheless accurate.

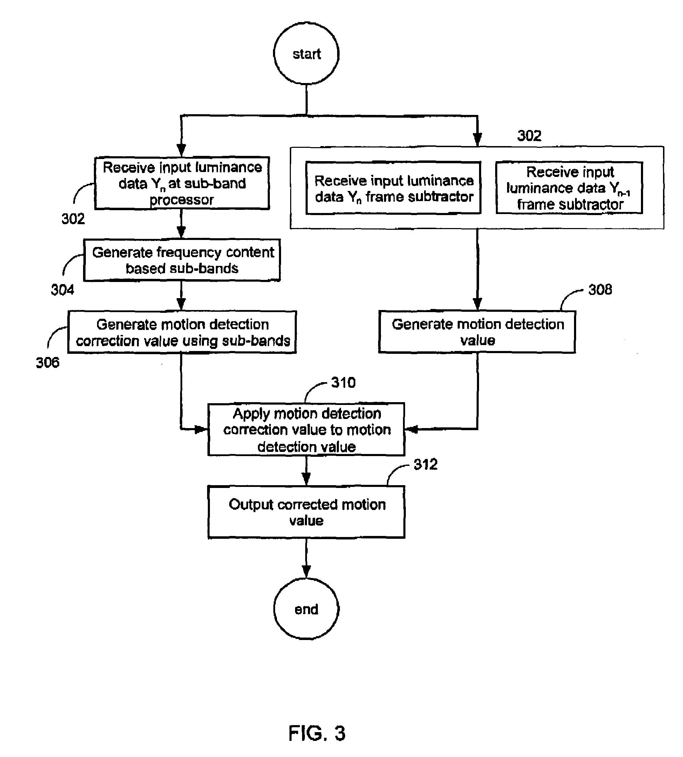

FIG. 3 shows a flowchart detailing a process 300 in accordance with an embodiment of the invention. The process 300 begins at 302 by receiving a input luminance signal Yₙ for an nth video frame at a sub-band processor unit and a motion detection unit in addition to a luminance signal Yₙ₋₁ for a previous video frame n-1 at the motion detection unit. It should be noted that in the described embodiment, motion detection is based upon frame subtraction performed by the motion detection unit. At 304, the sub-band processor unit generates a number of content frequency sub-bands each associated with a pre-determined energy level from which a motion detection correction value for the current video frame n is generated using the various frequency sub-bands at 306.

Concurrent with the generation of the motion detection correction value, the motion detector unit generates a frame motion value based upon, for example, a frame subtraction provided by a frame subtractor unit at 308. At 310, the motion detection correction value is applied to the generated motion detection value. It should be noted that the application of the detected motion correction value can take any form deemed appropriate. For example, the application can be a subtraction operation. At 312, the corrected (if necessary) detected motion value is output.

In a particular embodiment, a number of pre-determined energy threshold values determine whether or not the detected motion correction value is applied to the detected motion value. It is contemplated that the energy threshold values describe a region of spatial transition energies determined to be the most effective for application of the detection motion protocol.

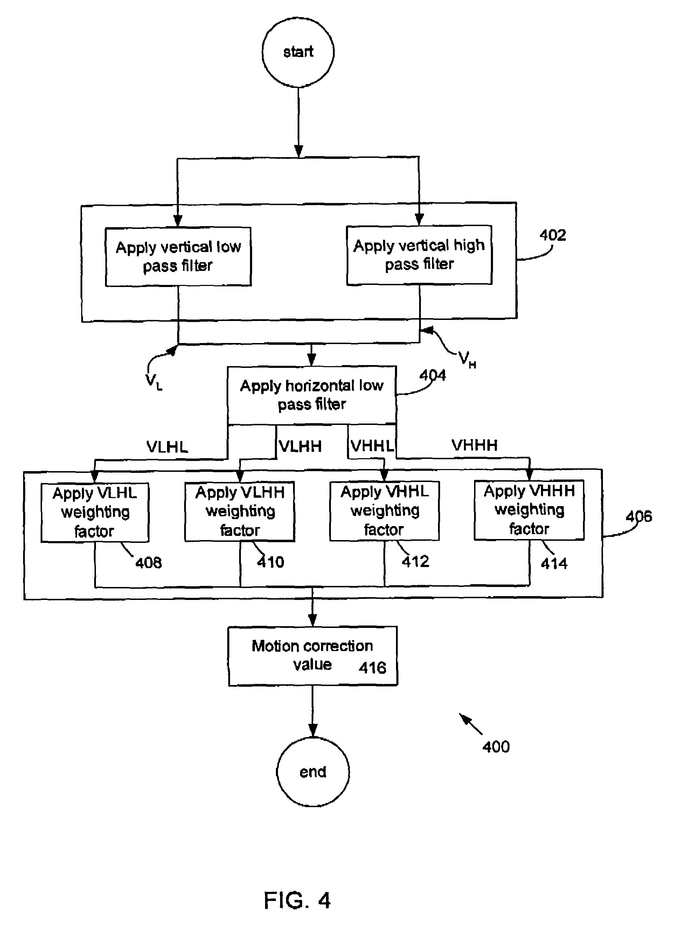

Fig. 4 shows in more detail a particular implementation of the sub-band generation operation 400 described above in reference to the sub-band processor unit at 304. In particular, the operation 400 begins at 402 by concurrently applying a vertical low pass filter and a vertical high pass filter followed at 404 by applying a horizontal low pass filter to the result of 402. At 406, a number of pre-determined weighting factors are applied in parallel to the result of 404. For example, at 408 a VHHL weighting factor is applied, at 410 a V_{L}H_{L} weighting factor is applied, at 412 a VHHL weighting factor is applied, and at 414 a V_{H}V_{H} weighting factor is applied. The result of 406 is then summed together to provide the motion correction value at 416. It should be noted, that in some cases, a number of pre-determined energy threshold values are applied that enable or disable the application of the detected motion correction value based upon whether or not the spatial transitions fall within the prescribed energy region defined by the energy thresholds.

## Claims

1. A, method of frequency content motion detection, comprising:
decomposing a raw field luminance data in to a number of frequency content sub-bands;
detecting motion using the raw field luminance data in parallel with the decomposing;
generating a motion correction value by multiplying absolute values of the sub-bands by weighting factors; and
applying the motion correction value to detected motion.

2. The method as recited in claim 1, further comprising:
using both a minimum threshold and a maximum threshold to enable or disable motion correction based upon the minimum and maximum thresholds wherein if any of the sub-band energies are beyond the threshold range then motion-correction is disabled.

3. The method as recited in claim 1, wherein the generating a number of sub-bands comprises:
using vertical and horizontal low and high pass filters.

4. The method as recited in claim 1, wherein the applying the motion correction value to detected motion comprises:
subtracting the motion correction value from the absolute difference value thereby correcting the motion detected by reducing the pseudo or false high motion values usually exhibited by regions in video streams having high vertical high horizontal high (V_{H}V_{H}) sub-band and vertical high horizontal low (V_{H}H_{L}) sub-band energies.

5. An apparatus for frequency content motion detection, comprising:
a sub-band processor for decomposing a raw field luminance data in to a number of frequency content sub-bands;
a motion detector for detecting motion using the raw field luminance data in parallel with the decomposing;
a motion correction value generator for generating a motion correction value by multiplying absolute values of the sub-bands by weighting factors; and
an operator for applying the motion correction value to detected motion.

6. The apparatus as recited in claim 5, further comprising:
a threshold unit for using both a minimum threshold and a maximum threshold to enable or disable motion correction based upon the minimum and maximum thresholds wherein if any of the sub-band energies are beyond the threshold range then motion-correction is disabled.

7. The apparatus as recited in claim 5, wherein the sub-band processor includes vertical and horizontal low and high pass filters.

8. The apparatus as recited in claim 5, wherein the applicator includes:
a subtraction unit for subtracting the motion correction value from the absolute difference value thereby correcting the motion detected by reducing the pseudo or false high motion values usually exhibited by regions in video streams having high vertical high horizontal high (V_{H}V_{H}) sub-band and vertical high horizontal low (V_{H}H_{L}) sub-band energies.

9. The method as recited in claim 1 or the apparatus as recited in claim 5, wherein the sub-bands include a vertical low horizontal high (V_{L}V_{H}) sub-band, a vertical low horizontal high (V_{L}H_{L}) sub-band, a vertical high horizontal high (V_{H}V_{H}) sub-band, and vertical high horizontal low (V_{H}H_{L}) sub-band.

10. The method as recited in claim 1 or the apparatus as recited in claim 5, wherein the weighting factors are such that the vertical-high and horizontal-low (V_{H}H_{L}) sub-band weight is around one-third of the sum of all the weighting factors.

11. The method or apparatus as recited in claim 10, wherein the vertical low horizontal high (V_{L}H_{L}) sub-band is zero.

12. The method or apparatus as recited in claim 10, wherein the weights for the vertical high horizontal high (V_{H}V_{H}) sub-band and vertical high horizontal low (V_{H}H_{L}) sub-band is approximately one-sixth of the sum of weighting factors.

13. The method as recited in claim 1 or the apparatus as recited in claim 10, wherein the detecting motion using the raw field luminance data comprises:
generating the absolute difference of adjacent same parity fields.
